# EUROPÄISCHE PATENTSCHRIFT

(11) **EP 0 513 014 B1**
(45) Veröffentlichungstag und Bekanntmachung des Hinweises auf die Patenterteilung: **09.11.1994**
(21) Anmeldenummer: 91901269.0
(22) Anmeldetag: 08.01.1991
(51) Int. Cl.: H02K 9/02

(54) **ELEKTRISCHE MASCHINE MIT FREMDBELÜFTUNG**
ELECTRICAL MACHINE WITH EXTERNAL AIR COOLING
MACHINE ELECTRIQUE A VENTILATION FORCEE

(30) Priorität: 03.02.1990 DE 4003155
(43) Veröffentlichungstag der Anmeldung: 19.11.1992
(73) Patentinhaber: ROBERT BOSCH GMBH, 70442 Stuttgart (DE)
(72) Erfinder: RAGALY, Istvan, D-7141 Schwieberdingen (DE)
(86) Internationale Anmeldenummer: DE9100003
(87) Internationale Veröffentlichungsnummer: WO9111845

(56) Entgegenhaltungen:
- EP-A- 0 231 785
- DE-A- 1 801 079
- DE-A- 1 926 256
- DE-C- 726 395
- DE-C- 896 086
- FR-A- 351 895
- GB-A- 162 552
- PATENT ABSTRACTS OF JAPAN, vol. 9, no. 274 (E-354)(1997), 31 October 1985 ; & JP-A-60 118 037

## Beschreibung

### Stand der Technik

Die Erfindung geht aus von einer elektrischen Maschine mit Fremdbelüftung nach dem Oberbegriff des Patentanspruchs 1.

Eine derartige elektrische Maschine ist aus der DE-C- 896 086 bekannt geworden.

Bei sogenannten Lichtmaschinen in Kraftfahrzeugen ist es üblich, auf der Antriebswelle des Generators einen oder zwei Lüfter starr zu befestigen, die zur Abführung der im Generator erzeugten Verlustwärme einen Luftstrom durch die Maschine leiten. Die innenliegenden Lüfter sind dabei so angebracht, daß die von ihnen geförderte Kühlluft über und an den Wickelköpfen vorbei nach außen strömt, wobei die Wärmeschicht um diese herum aufgerissen wird. Diese Anordnung verbessert zwar den Wirkungsgrad der Kühlung gegenüber Maschinen mit außenliegenden Lüftern, sie bereitet aber Probleme hinsichtlich aerodynamischer Geräusche bei hochtourigen Maschinen. Um dieses Problem zu beseitigen, hat man flüssigkeitsgekühlte Generatoren verwendet, bei denen die Gehäuseoberfläche am Ständer, an den Lagerschildern und an den Kühlkörpern der im Generator integrierten Gleichrichterelemente mit Wasser oder Öl gekühlt werden. Das Kühlmittel wird dort mit Pumpen gefördert und durchströmt dafür vorgesehene Kanäle an der Oberfläche der Maschine, nimmt die Verlustwärme auf, wird wieder gekühlt und schließlich zur Pumpe zurückgeführt. In den meisten Fällen ist dieser Kühlkreislauf ein geschlossenes, nach außen vollständig abgedichtetes System. Die elektrisch leitenden Teile der Maschine müssen elektrisch isoliert sein, insbesondere, wenn Wasser als Kühlmedium benutzt wird. Durch die Isolationsschicht wird jedoch die Effektivität der Kühlung wesentlich vermindert. Wegen der teueren Bearbeitung, wegen der erforderlichen Abdichtung selbst bei großen Temperaturwechseln und wegen der notwendigen Zuführung und Abführung des Kühlmittels werden solche Systeme nur dort eingesetzt, wo keine andere Möglichkeit besteht.

Aus der DE 33 03 148 Al ist schließlich eine fremdbelüftete elektrische Maschine bekannt, bei der auf einer Stirnseite Einlaßöffnungen für die Kühlluft und auf der gegenüberliegenden Stirnseite Luftaustrittsöffnungen vorgesehen sind, aus denen die von der Verlustwärme der Maschine erwärmte Luft nach außen entweicht. Die Kühlluft durchströmt dabei die elektrische Maschine in axialer Richtung nach den Gesetzen der Strömung und entweicht in die freie Umgebung. Aufgrund von engen Luftspalten, großen Querschnittsveränderungen und toten Zonen lassen sich bei derartigen Kühlsystemen keinen guten Kühlungswirkungsgrad erzielen und außerdem treten auch dort bei hochtourigen Maschinen erhebliche aerodynamische Geräusche auf.

Mit der erfindungsgemäßen Lösung wird angestrebt, die Luftführung innerhalb der Maschine so zu verbessern, daß sie möglichst intensiv die Bereiche der Maschine umspült, in denen die meiste Verlustwärme erzeugt wird.

### Vorteile der Erfindung

Die erfindungsgemäße Gestaltung der elektrischen Maschine mit den kennzeichnenden Merkmalen des Anspruchs 1 hat den Vorteil, daß sich durch einfache Maßnahmen an den Wickelköpfen der Maschine ringförmige Luftleitkanäle bilden lassen, durch die sich die Kühlluft ohne große Luftwiderstandsänderungen, z.B. durch Verwirbelungen von einer Eintrittsöffnung zu einer Austrittsöffnung lenken läßt und dabei die Verlustwärme an den Wickelköpfen der Maschine unmittelbar abführt. Durch die so vorgegebene Führung des Kühlluftstroms werden die aerodynamischen Geräusche an der Maschine erheblich verringert, zumal für die Erzeugung der Kühlluft außerhalb der elektrischen Maschine ein vom Verbrennungsmotor oder Elektromotor niedertourig angetriebener Drucklüfter oder Druckluftaggregat vorgesehen werden kann, wobei die Kühlluft gefiltert oder ungefiltert über einen Kühlluftschlauch zur elektrischen Maschine geführt wird. Es besteht auch die Möglichkeit, den Drucklüfter direkt auf die Antriebswelle der Maschine zu montieren, da infolge des verbesserten Kühlungswirkungsgrades der Drucklüfter einen kleineren Durchmesser haben kann, was zur Verminderung des aerodynamischen Geräusches führt.

Durch die in den Unteransprüchen aufgeführten Maßnahmen ergeben sich vorteilhafte Weiterbildungen und Verbesserungen der im Anspruch 1 angegebenen Merkmale. So ist es bei einem Drehstromgenerator für Kraftfahrzeuge besonders zweckmäßig, wenn das Maschinengehäuse aus zwei als Lagerschilde ausgebildete Gehäusehälften besteht, die das Blechpaket zwischen sich einspannen und im Bereich des Lagerschildes jeweils auf der Innenseite eine ringförmige Nut aufweisen, in die beim Zusammenbau der Maschine jeweils eine den Luftleitkanal zum Läufer hin begrenzende Ringwand eingesetzt wird. Eine für den Wirkungsgrad des Kühlsystems besonders vorteilhafte Kühlluftführung ist dadurch möglich, daß die Gehäusehälften über das Blechpaket reichen und dort einen luftdichten Luftzuführkanal zwischen den stirnseitig angeordneten Luftleitkanälen bilden. Die Gehäusehälften sind dabei zur Bildung eines solchen Luftzuführkanals miteinander verschraubt. Zweckmäßigerweise ist dabei an einer der beiden Gehäusehälften ein Lufteintrittsstutzen am Außenumfang des dort befindlichen ringförmigen Luftleitkanals vorzusehen, von dem aus der Luftzufuhrkanal über das Blechpaket hinweg zu dem anderen ringförmigen Luftleitkanal hinführt. Soweit eine besondere Belüftung des Läufers der Maschine erforderlich ist, können hierfür in vorteilhafter Weise die an den Lagerschildern aufgenommenen Ringwände der Luftleitkanäle mit Durchbrüchen versehen werden, um einen gezielten Luftstrom zum Läufer zu lenken. Bei Drehstromgeneratoren für Kraftfahrzeuge tritt ferner Verlustwärme an Gleichrichterdioden auf, die stirnseitig im Drehstromgenerator auf Kühlblechen angeordnet sind. Zur Abführung dieser Verlustwärme ist zweckmäßigerweise mindestens eine zusätzliche Öffnung in dem auf der selben Stirnseite liegenden Luftleitkanals vorzusehen, damit das Kühlblech der Gleichrichterdioden von der dort austretenden Kühlluft gekühlt werden kann.

Da die Wickelköpfe der Ständerwicklung zu den Hauptwärmequellen eines Generators zählen, ist anzustreben, daß die Wickelköpfe von den Luftleitkanälen möglichst eng umgeben werden, um die zugeführte Kühlluft mit großer Geschwindigkeit und ohne unnötige Drosselungen durch Querschnittsverengungen an den Wickelköpfen entlangzuführen. Dabei ist für den Kühlungswirkungsgrad vorteilhaft, wenn sich die Kühlluft an der Lufteintrittsöffnung eines jeden Luftleitkanals aufteilt, jeweils eine Hälfte des ringförmigen Luftleitkanals durchströmt und dann über eine Luftaustrittsöffnung abgeführt wird, die der Lufteintrittsöffnung gegenüberliegt. Die Kühlluft in den Luftleitkanälen kann dabei auch von einem Saugluftaggregat durch die Maschine gesaugt werden. In diesem Fall wird zweckmäßigerweise an mindestens einer der beiden Gehäusehälften ein Luftansaugstutzen am Außenumfang eines Luftleitkanals angebracht. Die Effektivität des Kühlsystems kann ferner dadurch erhöht werden, daß Lufteintrittsöffnung und Luftaustrittsöffnung des Luftleitkanals auf der einen Maschinenseite gegenüber denen des Luftleitkanals auf der anderen Maschinenseite um 180 Grad versetzt sind. Da die beidseitigen Wickelköpfe zu den gleichen Ständerwicklungen gehören, werden Temperaturunterschiede in den einzelnen Wicklungen des Ständers wesentlich verringert, da die Wicklungen am Austritt der warmen Luft des Lüftungskanals auf der einen Seite am Lüftungskanal der anderen Seite in der Zufuhr der kühlen Luft liegen. Eine weitere Verbesserung der Kühlung wird schließlich dadurch erreicht, daß die Luftleitkanäle jeweils zwei einander gegenüberliegende Lufteintrittsöffnungen aufweisen, zwischen denen um 90° versetzt zwei ebenfalls einander gegenüberliegende Luftaustrittsöffnungen angeordnet sind. Die Kühlluft wird hierbei nur noch durch je ein Viertel des ringförmigen Luftleitkanals geführt.

### Zeichnung

Einzelheiten der Erfindung sind in den Zeichnungen dargestellt und in der nachfolgenden Beschreibung näher erläutert. Es zeigen Figur 1 einen Drehstromgenerator für Kraftfahrzeuge mit Fremdbelüftung im Querschnitt und Figuren 2 bis 4 zeigen weitere Ausführungsbeispiele des Drehstromgenerators mit verschiedenartigen Kühlluftanschlußstutzen und Kühlluftabzweigungen von den Luftleitkanälen an den Wickelköpfen der Maschine. Die Figuren 5 bis 9 zeigen schematisch dargestellte Luftleitkanäle an den Wickelköpfen elektrischer Maschinen mit verschiedenen Lufteinlaß- und Luftauslaßöffnungen.

### Beschreibung der Ausführungsbeispiele

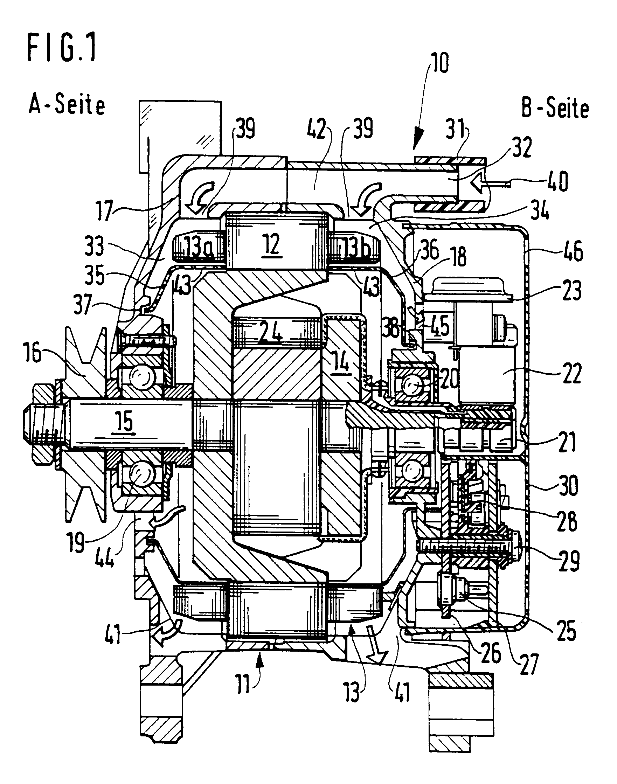

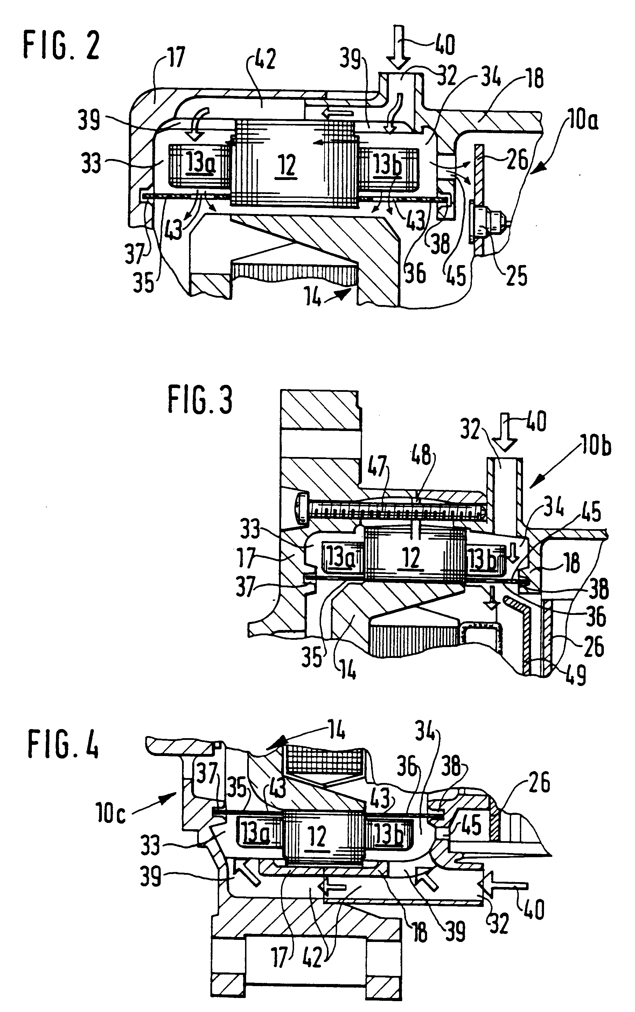

In den Figuren 1 bis 4 ist als fremdbelüftete elektrische Maschine ein Drehstromgenerator für Kraftfahrzeuge dargestellt und mit 10 bezeichnet, wobei gleiche Teile mit gleichen Bezugszahlen versehen sind. Während in Figur 2, 3 und 4 jeweils Ausschnitte des Drehstromgenerators mit verschiedenen Ausführungsformen der Fremdbelüftung dargestellt sind, zeigt Figur 1 den ganzen Drehstromgenerator 10 im Querschnitt. Der Generator 10 hat einen Ständer 11 aus einem Blechpaket 12, das eine Ständerwicklung 13 trägt und das in einem Gehäuse aufgenommen ist. Der Ständer 11 wirkt magnetisch mit einem Klauenpolläufer 14 zusammen, der auf einer Antriebswelle 15 befestigt ist, die über eine Riemenscheibe 16 vom Motor des Kraftfahrzeugs angetrieben wird. Das Generatorgehäuse besteht aus zwei topfförmigen Gehäusehälften 17, 18, die als Lagerschilde ausgebildet sind. Die Antriebswelle 15 ist auf der Antriebsseite A des Generators 10 in einem kräftigen Lager 19 gelagert, das in die linke Gehäusehälfte 17 eingesetzt ist, während ein schwächeres Lager 20 das Ende der Antriebswelle 15 auf der Bürstenseite B des Generators 10 aufnimmt. Dieses Lager 20 sitzt in der rechten Gehäusehälfte 18. Am Ende der Antriebswelle 15 befinden sich zwei Schleifringe 21, die über einen Bürstenhalter 22 und einem Regler 23 eine Erregerwicklung 24 des Läufers 14 elektrisch versorgen. Zum Gleichrichten des in den Ständerwicklungen 13 erzeugten Drehstroms sind auf der Stirnseite der rechten Gehäusehälfte 18 Gleichrichterdioden 25 in zwei sandwichartig übereinander angeordneten Kühlplatten 26, 27 befestigt, die durch eine Leiterplatte 28 zur Verschaltung der Gleichrichterdioden 25 voneinander auf Abstand gehalten werden und mittels Schrauben 29 an der Stirnseite der rechten Gehäusehälfte 18 festgeschraubt sind. Schleifringe 21, Bürstenhalter 22, Regler 23 und Gleichrichteranordnung 25 bis 28 sind von einer Staubschutzkappe 30 auf der B-Seite des Generators 10 abgedeckt.

Über einen in Figur 1 angedeuteten Schlauch 31 wird der Generator 10 mit Kühlluft versorgt, die in einem nicht dargestellten, separat im Fahrzeug angeordneten Gebläse oder Druckluftaggregat erzeugt wird. Das Ende des Schlauchs 31 ist auf einen Lufteintrittsstutzen 32 aufgeschoben, der an der rechten Gehäusehälfte 18 angeformt ist. Die Wicklungsköpfe 13a und 13b der Ständerwicklung 13 an den beiden Stirnseiten des Blechpakets 12 sind jeweils von einem ringförmigen Luftleitkanal 33, 34 umgeben, die außen durch das Maschinengehäuse 17, 18 gebildet sind und zum Läufer 14 hin durch jeweils eine zwischen dem Blechpaket 12 und dem Lagerschildbereich der Gehäusehälften 17, 18 eingesetzten Ringwand 35 bzw. 36 aus Kunststoff begrenzt sind. Die Aufnahme der beiden Ringwände 35, 36 erfolgt an der Innenseite der beiden Gehäusehälften 17, 18 durch eine im Bereich der Lagerschilde angebrachte ringförmige Nut 37, 38. Jeder der beiden Luftleitkanäle 33, 34 hat eine Eintrittsöffnung 39 für den mit einem Pfeil 40 angedeuteten Kühlluftstrom sowie auf der gegenüberliegenden Seite eine Austrittsöffnung 41. Der Lufteintrittsstutzen 32 führt unmittelbar zur Eintrittsöffnung 39 des rechten Luftleitkanals 34 sowie über einen Luftzufuhrkanal 42 zur Eintrittsöffnung 39 des linken Luftleitkanals 33. Der Luftzuführungskanal 42 wird dabei durch die beiden Gehäusehälften 17, 18 oberhalb des Blechpaketes 12 als Verlängerung des Lufteintrittsstutzens 32 gebildet, in dem die beiden Gehäusehälften 17, 18 miteinander verschraubt sind und dabei das Blechpaket 12 zwischen sich einspannen. Zur Belüftung des Läufers 14 durch einen kleineren Teil des Kühlluftstromes 40 sind die beiden Ringwände 35, 36 unterhalb der Wickelköpfe 13a, 13b mit einigen Durchbrüchen 43 im Bereich der Eintrittsöffnungen 39 versehen, so daß die von dort zum Läufer 14 gelangende Kühlluft die in ihm, insbesondere in der Erregerwicklung 24 erzeugte Verlustwärme aufnehmen kann und über Öffnungen 44 im Lagerbereich des Gehäuses abzuführen ist. Für eine Abführung der Verlustwärme in dem Regler 23 und in den Gleichrichterdioden 25 ist auf der rechten Seite des Generators 10 eine zusäztliche Öffnung 45 des auf dieser Seite liegenden Luftleitkanals 34 vorgesehen, die nach Aufnahme der Verlustwärme von den Kühlblechen 26, 27 durch Lüftungsschlitze 46 in der Staubschutzkappe 30 nach außen abgeführt wird. Durch die zu den Lagern 19 und 20 sich konisch verjüngenden Ringwänden 35 und 36 werden die Luftleitkanäle 33 und 34 bis dicht an die Lagerstellen heran erweitert, so daß die in den Lagern 19 und 20 erzeugte Verlustwärme zunächst in die Gehäusehälften 17 und 18 abfließt und von dort durch die Kühlluft in den Luftleitkanälen 33, 34 abgeführt wird.

In Figur 2 ist als weiteres Ausführungsbeispiel der obere Teil eines Drehstromgenerators 10a für Kraftfahrzeuge im Querschnitt dargestellt, bei dem der Lufteintrittstutzen 32 radial nach außen absteht und in der Eintrittsöffnung 39 des Luftleitkanales 34 auf der rechten Seite des Generators endet. Von dem Lufteintrittstutzen 32 zweigt der Luftzufuhrkanal 42 ab, der hier unmittelbar über das Blechpaket 12 hinweg zur Eintrittsöffnung 39 des linken Luftleitkanals 33 führt. Die Ringwände 35 und 36 mit ihren Durchbrüchen 43 unterhalb der Wickelköpfe 13a und 13b sind hier nicht wie in Figur 1 konisch heruntergezogen sondern in Ringnuten 37, 38 eingesetzt, die unmittelbar unterhalb der Wickelköpfe 13a, 13b auf der Innenseite der Gehäusehälften 17, 18 angeordnet sind.

Die Gehäusehälften 17 und 18 des Generators werden durch mehrere am Umfang verteilte Schrauben zusammengehalten. In Figur 3 ist eine derartige Schraube 47 des im Querschnitt dargestellten oberen Teils eines Drehstromgenerators 10b erkennbar. Das Blechpaket 12 hat hier in der Mitte eine stärkere Blechlamelle, die im Bereich der Schrauben 47 nach außen gerichtete Ohren 48 aufweist, durch welche die Schrauben 47 hindurchgehen und die zwischen den Gehäusehälften 17 und 18 eingespannt und zentriert sind. Luftzufuhrkanäle vom rechten Luftleitkanal 33 zum linken Luftleitkanal 34 sind hier nicht erkennbar, da sie in Umfangsrichtung gesehen vor oder hinter der Schraube 47 in die Gehäusehälften 17 und 18 eingeformt sind. Außerdem sind hier zusätzliche Öffnungen 45 zur Belüftung der Gleichrichterdioden in der rechten Ringwand 35 vorgesehen, wobei die hier austretende Kühlluft über ein Luftleitblech 49 zur Kühlplatte 26 der nicht erkennbaren Gleichrichterdioden geleitet wird.

Das in Figur 4 dargestellte Ausführungsbeispiel zeigt einen Drehstromgenerators 10c im Querschnitt mit einer axialen Kühlluftzuführung an der Unterseite der Maschine.

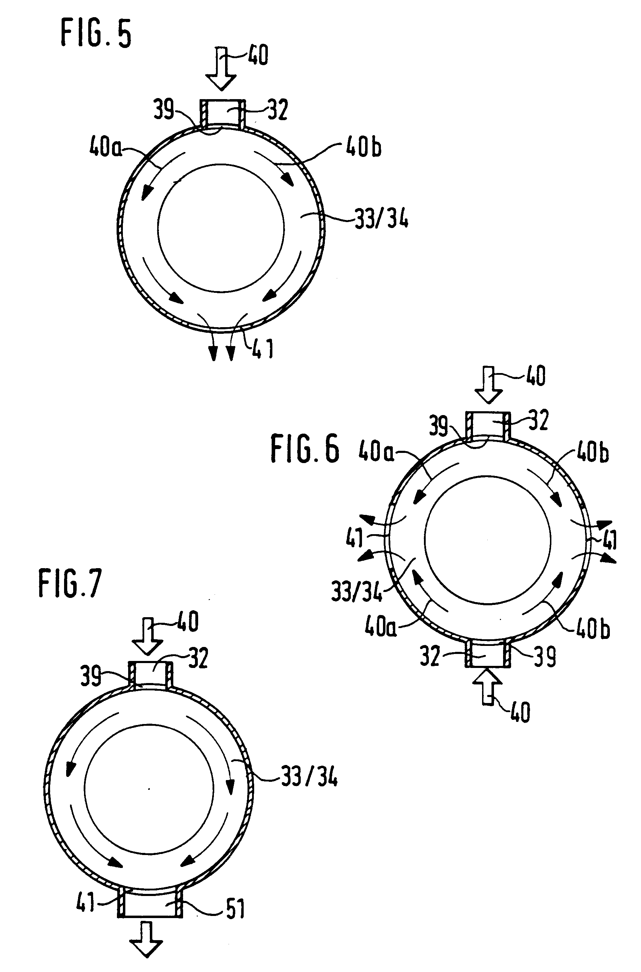

In den Figuren 5 bis 8 sind die Luftleitkanäle 33 und 34 des Generators 10 mit unterschiedlichen Eintritts- und Austrittsöffnungen schematisch dargestellt. So zeigt Figur 5 einen Luftleitkanal 33 bzw. 34 mit einem Lufteintrittsstutzen 32 an der oberen Eintrittsöffnung 39 und eine gegenüberliegende Ausrittsöffnung 41. Der Kühlluftstrom 40 teilt sich hier an der Eintrittsöffnung 39 des Luftleitkanals 32 bzw. 33 in zwei gleiche Teile 40a, 40b, die jeweils eine Hälfte des von ihnen umschlossenen Wickelkopfes kühlen und die dabei aufgenommene Wärme an der gemeinsamen, unten angeordneten Austrittsöffnung 41 nach außen abführen. Sollten durch Einbaubedingungen Eintrittsöffnung 39 und Austrittsöffnung 41 nicht symmetrisch zueinander sondern weniger als 180 Grad gegeneinander versetzt angeordnet sein, so ist durch eine entsprechende Gestaltung der Eintrittsöffnung 39 darauf zu achten, daß sich der Kühlluftstrom 40 in entsprechend unterschiedliche Zweigströme 40a, 40b aufteilt.

Figur 6 zeigt eine Lösung, bei der der Kühlluftstrom 40 durch zwei einander gegenüberliegende Eintrittsöffnungen 39 in den Luftleitkanal 33 bzw. 34 gelangt, sich dort jeweils in die Teilströme 40a und 40b teilt und dann an zwei ebenfalls einander gegenüberliegenden Austrittsöffnungen 41 nach außen abgeführt wird. Die Austrittsöffnungen 41 sind hier zwischen den Eintrittsöffnungen 39 am Außenumfang des Luftleitkanals 33, 34 angeordnet.

In Figur 7 ist dargestellt, daß sowohl an der Eintrittsöffnung 39 des Luftleitkanals 33, 34 ein Lufteintrittsstutzen 32 als auch an der Austrittsöffnung 41 ein Anschlußstutzen 51 für die Luftabführung angeformt ist, an dem beispielsweise ein Verbindungsschlauch zur Entfrostung der Windschutzscheibe oder zur Heizung des Fahrgastraumes angeschlossen werden kann. Mit einem zusätzlichen Gebläse kann die erwärmte Luft über diesen Anschlußstutzen 51 auch aus dem Luftleitkanal abgesaugt werden.

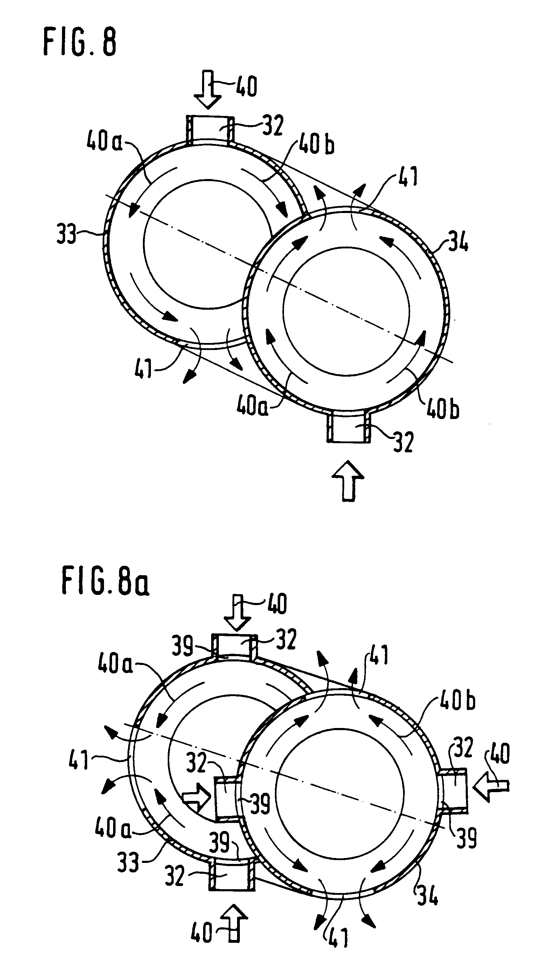

In Figur 8 ist dargestellt, daß die beiden Luftleitkanäle 33 und 34 jeweils in entgegengesetzter Richtung von der Kühlluft durchströmt werden. Die Lufteintrittsöffnung 39 des vorderen Luftleitkanals 34 liegt unten und die des hinteren Luftleitkanals 34 oben. Auch die Austrittsöffnungen 41 der beiden Luftleitkanäle 33 und 34 sind hier um 180 Grad gegeneinander versetzt. Damit wird erreicht, daß die Ständerwicklung der Maschine insgesamt gleichmäßiger und damit effektiver gekühlt werden kann, da die Wicklungsteile im unteren Bereich der Maschine am Wickelkopf im vorderen Luftleitkanal 34 stärker gekühlt werden als im hinteren Luftleitkanal 33 und umgekehrt werden die oberen Wicklungsteile am Wickelkopf im hinteren Luftleitkanal 33 stärker gekühlt als im vorderen Luftleitkanal 34. Da die in der Ständerwicklung erzeugte Verlustwärme jeweils zu den stärker gekühlten Wickelkopfenden hin verstärkt abfließt, wird die Wicklungstemperatur im Bereich der Austrittsöffnungen 41 der Luftleitkanäle 33 und 34 auf niedere Werte absinken, so daß die Effektivität der Kühlung dadurchwesentlich erhöht wird. Die Kühlluftzufuhr kann dabei außerhalb der Maschine durch zwei Anschlußschläuche oder durch eine Schlauchverzweigung realisiert werden. Ebenso ist es möglich, die zwei Eintrittsöffnungen 39 der Luftleitkanäle 33 und 34 durch einen Verbindungskanal im Gehäuse der Maschine zu realisieren.

In Figur 8a ist eine aus Figur 8 abgewandelte Lösung mit jeweils zwei Ein- und Austrittsöffnungen 32 bzw. 41 pro Luftleitkanal 33, 34 zueinander um 90° versetzt dargestellt. Auch hier wird die Wicklungstemperatur im Bereich der Austrittsöffnungen 41 gegenüber der Lösung nach Figur 6 weiter abgesenkt.

Die Erfindung ist nicht auf die dargestellten Ausführungsbeispiele für Drehstromgeneratoren in Kraftfahrzeugen beschränkt, sondern allgemein bei umlaufenden elektrischen Maschinen realisierbar. Zur Erzeugung der Kühlluft kann sowohl ein vom Verbrennungsmotor oder von einem Elektromotor angetriebener Drucklüfter oder ein Druckluft aggregat verwendet werden, wobei die Luft gefiltert oder ungefiltert über einen oder über zwei Schläuche zu den Luftleitkanälen der elektrischen Maschine geführt werden. Ferner besteht die Möglichkeit, einen Drucklüfter oder Sauglüfter direkt auf die Antriebswelle der elektrischen Maschine zu montieren. Außerdem kann die Kühlluft auch durch konstruktive Ausbildung des Gehäuses über mehrere Luftzufuhrkanäle von einem Luftleitkanal zum anderen Luftleitkanal geleitet werden. Die Anschlußstutzen für die Luftkühlung der Maschine lassen sich sowohl zur Druckluftkühlung mit Überdruck als auch zur Saugluftkühlung mit Unterdruck verwenden. Da die Gehäuseoberfläche der Maschine im wesentlichen geschlossen ist, ergibt sich eine spritzwassergeschützte und korrosionsarme Ausführung. Ferner besteht die Möglichkeit, daß ein Luftleitkanal nur auf einer Seite der Maschine um den Wickelkopf herum angeordnet ist und daß die Kühlluft von diesem Luftleitkanal über axiale, im Gehäuse ausgebildete Kühlkanäle oberhalb des Ständerblechpaketes sowie durch nicht voll mit der Ständerwicklung ausgefüllte Nuten des Blechpaketes hindurchgeführt wird, wobei dann die Verlustwärme aus den wärmsten Stellen im Blechpaket der Maschine heraus zur anderen Seite und von dort nach außen ins Freie abgeführt werden kann. Ebenso ist es möglich, an beiden Wickelköpfen der Maschine Luftleikanäle mit unterschiedlichem Querschnitt vorzusehen und dadurch bei nicht gefüllten Nuten des Blechpaketes eine axiale Strömungskomponente des Kühlluftstromes durch das Blechpaket hindurch zu erzeugen, die den Wirkungsgrad des Kühlsystems weiter verbessern kann. Für die zusätzliche Kühlung weiterer Wärmequellen innerhalb der elektrischen Maschine ist es erforderlich, daß die Anordnung und Ausbildung der dafür erforderlichen zusätzlichen Öffnungen und Durchbrüche in den Luftleitkanälen von Fall zu Fall neu festgelegt wird.

Durch die unmittelbare Abführung der im wesentlichen in der Ständerwicklung der Maschine erzeugten Verlustwärme mit Hilfe der Luftleitkanäle ergibt sich ein guter Wirkungsgrad des Kühlsystems, so daß relativ klein dimensionierte Kühllufterzeuger verwendet werden können. Dies führt sowohl zur Verringerung des aerodynamischen Maschinengeräusches sowie zur Erhöhung der zulässigen Belastung der Maschine bzw. bei gleicher Leistung zu kleineren Abmessungen der Maschine.

## Patentansprüche

1. Elektrische Maschine mit Fremdbelüftung, mit einem die Ständerwicklung (13) tragenden Blechpaket (12) und einem magnetisch damit zusammenwirkenden Läufer (14), der in einem diese Teile aufnehmenden Maschinengehäuse (17, 18) gelagert ist, wobei das Maschinengehäuse zur Abführung der in der Maschine erzeugten Verlustwärme mit Öffnungen (39, 41) für den Eintritt und Austritt der von außen zugeführten Luft aufweist, und an mindestens einer der beiden Stirnseiten des Blechpaketes (12) ein Wickelkopf (13a, 13b) der Ständerwicklung (13) ringförmig von einem Luftleitkanal (33, 34) umgeben ist, der mindestens eine Eintrittsöffnung (39) und mindestens eine Austrittsöffnung (41) für einen in Umfangsrichtung den Wickelkopf (13a, 13b) umspülenden Kühlluftstrom (40) aufweist und daß der mindestens eine Luftleitkanal (33, 34) außen durch das Maschinengehäuse (17, 18) gebildet ist und zum Läufer (14) hin durch eine unterhalb des Wickelkopfes (13a, 13b) zwischen dem Blechpaket (12) und einem Lagerschild des Gehäuses (17, 18) angeordnete Ringwand (35, 36) begrenzt ist, dadurch gekennzeichnet, daß das Maschinengehäuse aus zwei als Lagerschilde ausgebildete Gehäusehälften (17, 18) besteht, die das Blechpaket (12) zwischen sich einspannen und an beiden Stirnseiten des Blechpakets (12) jeweils einen Luftleitkanal (33, 34) bilden, wobei im Bereich des Lagerschildes auf der Innenseite der Gehäusehälfte (17, 18) jeweils eine ringförmige Nut (37, 38) vorgesehen ist, in welche jeweils die zwischen Blechpaket (12) und Gehäusehälfte (17 bzw. 18) eingesetzte Ringwand (35 bzw. 36) aufgenommen ist.

2. Elektrische Maschine nach Anspruch 1, dadurch gekennzeichnet, daß die Gehäusehälften (17, 18) über das Blechpaket (12) reichen und dort luftdicht unter Bildung mindestens eines Luftzufuhrkanals (42) zwischen zwei stirnseitig angeordneten Luftleitkanälen (33, 34) miteinander verschraubt sind.

3. Elektrische Maschine nach Anspruch 2, dadurch gekennzeichnet, daß mindestens eine der beiden Gehäusehälften (17, 18) einen Lufteintrittstutzen (32) am Außenumfang des einen Luftleitkanals (32, 34) aufweist, von dem aus der Luftzufuhrkanal (42) über das Blechpaket (12) hinweg zu dem anderen Luftleitkanal (33) führt.

4. Elektrische Maschine nach einem der vorherigen Ansprüche, dadurch gekennzeichnet, daß die jeweils zwischen Lagerschild und Blechpaket (12) eingesetzten Ringwände (35, 36) mit Durchbrüchen (43) zur Kühlung des Läufers (14) versehen sind.

5. Elektrische Maschine nach einem der Ansprüche 1 bis 5, dadurch gekennzeichnet, daß die Luftleitkanäle (33, 34) zwei einander gegenüberliegende Lufteintrittsöffnungen (39) aufweisen, zwischen denen zwei ebenfalls einander gegenüberliegende Luftaustrittsöffnungen (41) angeordnet sind.

6. Elektrische Maschine nach einem der vorherigen Ansprüche, dadurch gekennzeichnet, daß sie als Drehstromgenerator für Kraftfahrzeuge mit stirnseitig aufgebrachten Kühlplatten (26, 27) angeordneten Gleichrichterdioden (25) versehen ist, welche über mindestens eine zusätzliche Öffnung (45) des auf derselben Seite liegenden Luftleitkanals (33) mit Kühlluft zu versorgen sind.

## Claims

1. Electrical machine with external air cooling, having a stack of laminations (12) carrying the stator winding (13) and a rotor (14) which magnetically cooperates therewith and which is mounted in a machine housing (17, 18) receiving these parts, the machine housing exhibiting openings (39, 41) for the inlet and outlet of the air supply from outside to conduct away the heat due to energy losses which is generated in the machine, and at at least one of the two end faces of the stack of laminations (12) a winding head (13a, 13b) of the stator winding (13) being annularly surrounded by an air duct (33, 34) which exhibits at least one inlet opening (39) and at least one outlet opening (41) for a cooling air stream (40) circumcirculating the winding head (13a, 13b) in the circumferential direction and the at least one air duct (33, 34) being formed externally by the machine housing (17, 18) and being bounded towards the rotor (14) by an annular wall (35, 36) disposed below the winding head (13a, 13b) between the stack of laminations (12) and a bearing plate of the housing (17, 18), characterized in that the machine housing comprises two housing halves (17, 18) which are designed as bearing plates and which clamp the stack of laminations (12) between them and form in each case one air duct (33, 34) at both end faces of the stack of laminations (12), in each case one annular groove (37, 38) being provided in the region of the bearing plate on the internal surface of the housing half (17, 18), into which annular groove in each instance the annular wall (35 or 36 respectively) inserted between stack of laminations (12) and housing half (17 or 18 respectively) is received.

2. Electrical machine according to Claim 1, characterized in that the housing halves (17, 18) extend over the stack of laminations (12) and are there screwed to one another in airtight fashion with the formation of at least one air supply channel (42) between two air ducts (33, 34) disposed at the end face.

3. Electrical machine according to Claim 2, characterized in that at least one of the two housing halves (17, 18) exhibits an air inlet connection (32) at the outer periphery of the one air duct (32, 34), from which the air supply channel (42) leads over the stack of laminations (12) away to the other air duct (33).

4. Electrical machine according to one of the preceding claims, characterized in that the annular walls (35, 36) inserted in each instance between bearing plate and stack of laminations (12) are provided with through openings (43) for cooling the rotor (14).

5. Electrical machine according to one of Claims 1 to 4, characterized in that the air ducts (33, 34) exhibit two mutually opposite air inlet openings (39), between which two likewise mutually opposite air outlet openings (41) are disposed.

6. Electrical machine according to one of the preceding claims, characterized in that, as an alternator for motor vehicles, it is provided with rectifier diodes (25) disposed [lacuna] cooling blades (26, 27) fitted to the end face, which rectifier diodes are to be supplied with cooling air via at least one additional opening (45) of the air duct (33) situated on the same side.

## Revendications

1. Machine électrique à ventilation forcée, comportant un paquet de tôles (12) portant l'enroulement de stator (13) et un rotor (14) coopérant de manière électromagnétique avec le stator, qui est logée dans un carter de machine (17, 18) recevant ces pièces, le carter de la machine ayant des ouvertures (39, 41) d'entrée et de sortie d'air fourni par l'extérieur, pour évacuer la chaleur dégagée dans la machine et, sur au moins l'une des deux faces frontales du paquet de tôles (12), une tête d'enroulement (13a, 13b) de l'enroulement de stator (13) est entourée, suivant une forme annulaire, par un canal de guidage d'air (33, 34) qui comporte au moins un orifice d'entrée (39) et par au moins un orifice de sortie (41) pour un courant d'air de refroidissement (40) balayant la tête d'enroulement (13a, 13b) dans la direction périphérique, et au moins ce canal d'air (33, 34) est formé extérieurement par le carter de la machine (17,18) et est délimité vers le rotor (14) par une paroi annulaire (35, 36) prévue sous la tête d'enroulement (13a, 13b) entre le paquet de tôles (12) et un panneau de palier du boîtier (17, 18), machine caractérisée en ce que le carter de la machine se compose de deux moitiés de carter (17, 18) réalisées sous la forme de panneaux de palier, ces moitiés enserrant entre elles le paquet de tôles (12) et formant au niveau des deux faces frontales du paquet de tôle e(12), chaque fois un canal de guidage d'air (33, 34) et au niveau du panneau de palier sur le côté intérieur de la moitié de carter (17, 18) il est prévu chaque fois une rainure annulaire (37, 38) qui reçoit respectivement la paroi annulaire (35, 36) placée entre le paquet de tôles (12) et la moitié de carter (17, 18).

2. Machine électrique selon la revendication 1, caractérisée en ce que les moitiés de carter (17, 18) débordent sur le paquet de tôles (12) et sont réunies par vissage, de manière étanche à l'air en formant au moins un canal d'alimentation en air (42) entre deux canaux de guidage d'air (33, 34) prévus sur la face frontale.

3. Machine électrique selon la revendication 2, caractérisée en ce qu'au moins l'une des deux moitiés de carter (17, 18) comporte un ajutage d'entrée d'air (32) à la périphérie extérieure de l'un des canaux de guidage d'air (32, 34), le canal de guidage d'air (42) partant de celui-ci en passant par le paquet de tôles (12) jusque vers l'autre canal de guidage d'air (33).

4. Machine électrique selon l'une des revendications précédentes, caractérisée en ce que les cloisons annulaires (35, 36), placées chaque fois entre le panneau de palier et le paquet de tôles (12), comportent des passages (42) pour refroidir le rotor (14).

5. Machine électrique selon l'une des revendications 1 à 4, caractérisée en ce que les canaux de guidage d'air (33, 34) comportent deux orifices d'entrée d'air (39), opposés, et entre lesquels il y a deux orifices de sortie d'air (41) également opposés.

6. Machine électrique selon l'une des revendications précédentes, caractérisée en ce qu'il s'agit d'un alternateur de véhicule automobile comportant des diodes de redressement (25) prévues sur les plaques de refroidissement (26, 27) placées en avant, et qui sont alimentées en air de refroidissement par au moins une ouverture supplémentaire (45) du canal de guidage (33) situé du même côté.
